# EUROPEAN PATENT APPLICATION

(11) **EP 2 141 126 A1**
(43) Date of publication of application: **06.01.2010**
(21) Application number: 08738915.1
(22) Date of filing: 26.03.2008
(51) Int. Cl.: C01G 49/02, B01J 20/06, C02F 1/28

(54) **POROUS IRON OXIDE, PROCESS FOR PRODUCING THE SAME, AND METHOD OF TREATING WATER**

(30) Priority: 02.04.2007 JP 2007096443
(71) Applicant: Dowa Metals & Mining Co., Ltd., Tokyo 101-0021 (JP)
(72) Inventor: FUJITA, Tetsuo, Tokyo 101-0021 (JP); TAGUCHI, Ryoichi, Tokyo 101-0021 (JP); KUBO, Syouji, Tokyo 101-0021 (JP)
(74) Representative: Müller-Boré & Partner Patentanwälte
(86) International application number: PCT/JP2008/055727
(87) International publication number: WO 2008/120636

(57) **Abstract**

To provide a recovery agent for recovering arsenic, fluorine, lead, and selenium from a solution containing environmentally hazardous substances including arsenic and fluorine. A porous iron oxide having a particle size of 10 to 100µm and a specific surface area of 50m²/g or larger determined by three-point BET method is introduced into a solution containing the environmentally hazardous substances. Alternatively, a solution containing the environmentally hazardous substances is passed through a column filled with the porous iron oxide. Thus, the environmentally hazardous substances are recovered from the solution.

## Description

### Technical Field of the Invention

The present invention relates to a porous iron oxide and a method for producing the same and a method for treating solutions, suitable for adsorption of environmentally hazardous substances such as a heavy metal.

### Description of Related Art

In various industrial processes such as nonferrous metal smelting, various intermediate products and waste products are generated. Such intermediate products and waste products include highly environmentally hazardous substances such as arsenic and fluorine in some cases.

Therefore, study on detoxifying the environmentally hazardous substances has been performed. Inventors of the present invention also proposes patent document 1 as a new arsenic fixing method.

Meanwhile, it is suggested to patent document 2 that iron oxyhydroxide is used as an adsorptive agent directed to fluorine.

Patent document 1:
Japanese Patent Application No.2006-126896 Patent document 2:
Japanese Patent Application No.2005-154608

### Disclosure of the Invention

### Problem to be solved by the Invention

However, there is also a possibility that environmentally hazardous substances detoxified once are recovered after a long period of time. Meanwhile, the environmentally hazardous substances can be important resources, if it can be recovered successfully.
If the aforementioned.circumstance is taken into consideration, it is extremely effective for industries associated with the environmentally hazardous substances, to develop a method of recovering the environmentally hazardous substances contained in various intermediate products and waste, easily and at a low cost.

However, when a recovering method and a recovering agent are different in each environmentally hazardous substance, the number of required facilities is increased, and management is also complicated, thus increasing a recovering cost accordingly. Therefore, it is desired that the recovering method and the recovering agent can be used in common, irrespective of each environmental load.

The present invention is provided under the aforementioned circumstance, and an object of the present invention is to provide the recovering agent and a method for producing the same, capable of recovering arsenic and fluorine, etc, over various kinds, from a solution containing the environmentally hazardous substances such as arsenic, lead, selenium, fluorine, heavy metal, and halogen.

### Means for solving the Problem

In a study described in the patent document 1, inventors of the present invention achieve a method for causing reaction between arsenic and iron so as to be deposited and non-elutable as a scorodite crystal material (describes as scorodite in some cases hereinafter.).
The inventors of the present invention make a further strenuous effort, to obtain knowledge that this scorodite is violently reacted with an alkaline aqueous solution. Here, as a result of studying on this reaction in detail by the inventors of the present invention, it becomes possible to obtain a completely new knowledge that almost 100% of the arsenic contained in this scorodite is instantaneously leached out and dissolved into the aqueous solution, when 3 equivalent or more of alkali is reacted with 1 equivalent of arsenic in scorodite. Further, the scorodite after releasing the arsenic is turned into a porous iron oxide having numerous pores as a result of losing the arsenic, with an initial shape maintained.

Further, it is found by the inventors of the present invention that when the porous iron oxide is brought into contact or charged into an aqueous solution in which arsenic, fluorine, lead, and selenium, etc, are dissolved, these substances are effectively adsorbed on the porous iron oxide.

Namely, a first means for solving the above-described problem is a porous iron oxide, having a particle size of 10µm or more and 100µm or less, with a specific surface area measured by a nitrogen gas adsorption method set to be 50m²/g or more.

A second means is the porous iron oxide according to the first means, having pores with a diameter measured by a nitrogen gas adsorption method set to be 10Å (Angstrom, 10⁻¹⁰m) or more and 30Å or less.

A third means is a method for producing a porous iron oxide, including the steps of:
adding an iron (II) ion to an arsenic-containing solution, to seta molar ratio of iron/arsenic (Fe/As) in this solution to be 1 or more, and after heating this solution by adding an oxidant while stirring, subjecting this solution to solid/liquid separation to thereby obtain a solid matter;
obtaining a slurry by charging this solid matter into an alkaline solution; and
subjecting this slurry to solid/liquid separation, to thereby obtain a porous iron oxide.

A fourth means is a treating method for treating solutions, which is a method for treating solutions containing arsenic, wherein the solutions are passed through a column filled with the porous iron oxide according to the first or second means, and arsenic is adsorbed on the porous iron oxide and removed from the solutions.

A fifth means is a method for treating solutions, which is a method for treating solutions containing arsenic, wherein the porous iron oxide according to the first or the second means is charged into the solutions, and arsenic is adsorbed on the porous iron oxide and removed from the solutions.

A sixth means is a method for treating water to be treated, which is a methods for treating water to be treated containing fluorine, wherein the porous iron oxide according to the first or the second means is charged into the water to be treated, and fluorine is adsorbed on the porous iron oxide and removed.

### Advantage of the Invention

A porous iron oxide according to the present invention is capable of effectively adsorbing arsenic and fluorine, etc, by being brought into contact with the solutions, or being charged into the solutions, in which arsenic and fluorines, etc, are dissolved.

### Best Mode for carrying out the Invention

A porous iron oxide of the present invention has a particle size of 10µm or more and 100µm or less, and has a high specific surface area. Incidentally, an evaluation of a specific surface area measured by a BET 1-point method shows about 10 to 15m²/g. Also, an evaluation of a specific surface area measured by a BET 3-point method shows about 50m²/g or more and 200m²/g or less. The porous iron oxide of the preset invention has such a high specific surface area, and it appears that this is because the iron oxide has numerous pores having diameter of 10Å or more and 30 Å or less, measured by a nitrogen gas adsorption method. Further, the porous iron oxide of the present invention has amorphous crystal properties close to so-called 2 Line-Ferrihydrite.

The porous iron oxide of the present invention is effective as an adsorptive agent of environmentally hazardous substances. As adsorvable environmentally hazardous substances, fluorine, selenium, and lead are also adsorbable in addition to arsenic. Note that when the fluorine is adsorbed, it is preferable to construct a fluorine treatment flow circulation system together.

The solutions from which the environmentally hazardous substances such as arsenic, fluorine, and selenium, etc, are removed by the porous iron oxide of the present invention, can be subsequently subjected to a normal waste water treatment (COD treatment, etc.). Of course, if a waste water reference of other item is satisfied, the waste water can also be discharged as it is.

It is general to' use a column-type, as an absorbing operation for adsorbing and removing the environmentally hazardous substances from the solutions, by using the porous iron oxide of the present.invention. Of course, it is also possible to use a system in which the porous iron oxide and the solutions are brought into contact with each other while being stirring, and thereafter subjected to solid/liquid separation, with this process set as one cycle, and this cycle is repeated. However, when this cycle is repeated while using this column-type, a control criterion for a breakthrough column is changed suitably, if an adsorption efficiency of the porous iron oxide is fluctuated.

When a multi-stage column is assembled by using the porous iron oxide of the present invention, and operation of adsorbing the environmentally hazardous substances is performed by column-type adsorbing operation, an adsorption capability is assumed to be saturated when the column of the first stage is beyond its capacity and a concentration reaches the same level as that of an untreated solution. For example, in a case of adsorbing arsenic, about 5% of the arsenic is adsorbed when the adsorption capability is saturated. The porous iron oxide, with arsenic adsorbed thereon, is regenerated by alkali-leaching by using the aforementioned sodium hydroxide. An optimal value of equivalent of alkali in regenerating the porous iron oxide is determined by an arsenic adsorption amount, and therefore can be preferably adjusted suitably.

Here, a method for producing the porous iron oxide of the present invention will be described. First, a method for producing scorodite, being an iron arsenic compound, will be described, and next a method for producing the porous iron oxide from this scorodite will be described.

The scorodite can be produced by adding iron (II) ion to the arsenic-containing solution, to set the molar ratio of iron/arsenic (Fe/As) in this solution to be 1 or more, then adding an oxidant agent and increasing the temperature to 50° C or more while stirring this solution, and thereafter drying a. solid portion obtained by subjecting this solution to solid/liquid separation.

The concentration of the arsenic in the arsenic-containing solution is not required to be so high, provided that the concentration of sodium contained as an impurity is 1g/L or less. However, when the concentration of the arsenic is low, large particles are hardly synthesized in a process from precipitation to growth of the scorodite, and therefore the concentration of the arsenic is preferably set to be higher. The concentration of the arsenic is preferably set to be 10g/L or more, and is further preferably set to be 30g/L or more. Further, pH of the arsenic-containing solution is preferably set to be 2 or less at the initial time of the reaction. Also, pentavalent arsenic is preferable.
When scorodite crystalline particles are made coarse, a selectable range is preferably widened when the particle size of the adsorptive agent is determined in a later process.

Soluble eSO₄·7H₂O is preferable as an iron (II) source. The molar ratio (Fe/As) of iron/arsenic in this solution is preferably set to be 1 or more, and is further preferably set to be 1.0 to 1.5.
The oxidant agent capable of oxidizing the iron (II) ion may be preferable, and for example, oxygen gas can be given as an example thereof.

The scorodite can be formed if the reaction temperature is set to be 50°C or more. Here, in order to reduce arsenic solubility from scorodite, the reaction temperature is preferably set to be 70°C or more, and is further preferably set to be 80 to 95°C. The reaction time may be set to be 1 to 3 hours.
In the method for producing the scorodite as described above, the reaction is caused under an atmospheric pressure. Of course, the scorodite can be produced by causing hydrothermal synthetic reaction using an autoclave. According to the above-described method for producing the scorodite, the obtained scorodite has a high crystallinity with extremely low solubility of the arsenic, and becomes a stable substance. In the present invention, excellent porous iron oxide can be obtained, with this scorodite as a raw material.

Meanwhile, as the method for producing the scorodite, being the raw material of the porous iron oxide of the present invention, it is possible to produce the scorodite of large particles with less moisture, by adjusting pH and by hydrothermal synthesis, using iron (III). When this iron (III) is used, the crystallinity evaluated by XRD is slightly low, compared with a case that the iron (II) is used. A peak of the scorodite clearly appears in this XRD spectrum, and therefore it can be considered that although the scorodite has a high crystallinity in the stage of a primacy particle, similarly to the case that the iron (II) is used, large crystalline particles are formed by agglutinating. Therefore the crystallinity observed by XRD evaluation appears to be low.
Eventually, when'the scorodite is produced by using the iron (III), this scorodite can also be used as the raw material of the present invention, in spite of instability that the arsenic is dissolved.

The produced scorodite is subjected to solid/liquid separation from the solution after reaction, and is charged into alkaline solution. Here, sodium hydroxide or potassium hydroxide is preferable as the alkali used in this alkaline solution. In principle, rubidium or cesium can also be used, but they are rare elements, thereby incurring much cost. Generally, sodium hydroxide is preferably used.
When alkaline earth elements are used as alkali, it should be noted that such elements are substances to fix the arsenic, and therefore can not be a material for leaching the arsenic into the solution from the scorodite.

It is preferable to set the alkali content to be a highly alkaline state, so that pH of the alkaline solution before charging the scorodite is 10 or more, and in this state, the alkaline property after reaction is maintained.
(Formula 1) shows a reaction formula of this reaction. However, in this formula (formula 1), Fe₂O₃ is not hematite, and therefore a case such as containing water is estimated.

2FeAsO₄·2H₂O + 6NaOH=2Na₃AsO₄ + Fe₂O₃ + 7H₂O ... (Formula 1)

Incidentally, other than the aforementioned formula 1, two formulas of (Formula 2) (Formula 3) shown below can be considered. However, the scorodite is a compound in which iron and arsenic are stably bonded to each other, and therefore sufficient amount of alkali content is required for completely leaching out the arsenic. Specifically, 3 equivalent of alkali is required based on 1 equivalent of arsenic.

2FeAsO₄·2H₂O + 4NaOH=2Na₂HAsO₄ + Fe₂O₃ + 5H₂O ... (Formula 2)

2FeAsO₄·2H₂O + 2NaOH=2NaH₂AsO₄ + Fe₂O₃ + 3H₂O ... (Formula 3)

Therefore, for example, in a case that the scorodite, with As grade set to be 30%, is added to sodium hydroxide solution 1L so as to obtain a pulp concentration of 200g/L, a sodium hydroxide concentration of 200 × 30% ö 74.922 × 3 × 40=96.1g/L (about 100g/L) is necessary, if 100% of As is kept from leaching out into the solution.

Accordingly, when the sodium hydroxide concentration is 50g/L, leaching-out of the arsenic is suppressed to be about half. Thus, it appears that no reaction of (Formula 2) and' (Formula 3) occurs.

If the arsenic is leached out from the scorodite, oxygen is not required in principle. The arsenic composing scorodite is already pentavalent and iron is already trivalent. However, if the arsenic (III) is considered to be adsorbed and slightly exist, oxygen or air is preferably introduced to make this arsenic (III) turn into the arsenic (V).

When the scorodite is charged into the alkaline solution, reaction occurs immediately, and the scorodite is turned into a reddish brown precipitate. At this time, heat of dissolution is generated and a liquid temperature is increased.

Here, in order to protect the structure of the generated porous iron oxide from this heat of dissolution, and prevent the solution from boiling, mild stirring of 1W/L or less is preferably performed, to set the liquid temperature to be 70°C or less. Note that even when the stirring is strengthened, the structure of the generated porous iron oxide itself is not vandalized, although it is broken by a stirring impeller and is made smaller in particle diameter. Meanwhile, when the liquid temperature is excessively lowered, viscosity of the sodium hydroxide solution is increased. Therefore, a suitable temperature is preferably maintained, according to the alkali concentration of the solution.

The slurry obtained after leaching the scorodite in the alkaline solution is subjected to solid/liquid separation. Various methods such as a filter press method, a centrifugal separation method, and a decanter method, can be used for the solid/liquid separation.
The leached solution after this solid/liquid separation shows alkaline property, and contains arsenic and a slight amount of sulfur. This solution is preferably re-treated as an arsenic solution of high purity.
The arsenic solution obtained by re-treatment can be a superior arsenic raw material for synthesizing scorodite or other arsenic compounds.

Most of the solid portion generated by this solid/liquid separation is the porous iron oxide, with the leached solution slightly adhered thereto. Therefore, it is preferable to perform washing to remove this leached solution.
Specifically, when added water is passed through a cake of the porous iron oxide, by using a filter press, a belt filter, or a centrifugal precipitator, the leached solution can be removed by a small amount of water. Moreover, when re-pulping washing is applied, used water can be reduced if counter current-type washing is performed.

The porous iron oxide itself exists as a base, showing a tendency of alkali property. Therefore, it is preferable to perform a neutralizing operation of the porous iron oxide itself. By this neutralizing operation, pH control of the waste water is facilitated, when the porous iron oxide is used. Here, as a neutralizing agent, any one of sulfuric acid, hydrochloric acid, nitric acid can be used, and mild acid such as acetic acid can also be used. Then, although pH after this neutralizing operation is generally set to be a neutral region, it is also preferably set according to a liquid property of the liquid to be treated. pH region, where an adsorption capability of the porous iron oxide is sufficiently exhibited, is in a range of 3 to 7. Here, it is effective to perform repulping and washing the porous iron oxide, from a viewpoint of uniformly pH-controlling the waste water by using the porous iron oxide.
In the porous iron oxide after washing and pH adjustment, the particle maintains the shape of a starting material, having a particle size of 10 to 100µm and having a high specific surface area.

### Examples

### (Example 1)

Arsenic solution (As:500g/L) of a reagent (produced by Wako Pure Chemical Industries, Ltd.) and iron (II) sulfate heptahydrate (produced by Wako Pure Chemical Industries, Ltd.) were prepared.

This arsenic solution and ferrous salt were weighed so that the arsenic concentration was set to be 50g/L and iron (II) concentration was set to be 55.91g/L, then distilled water was added thereto, and 4L of arsenic and ion solution was prepared.

The prepared 4 Liter of arsenic-ion solution was transferred to a glass beaker having a capacity of 5L, and two turbine impellers and four baffles were set. Subsequently, the liquid temperature was raised to 95°C while stirring was strengthened, with the number of rotations set to be 800rpm by using these impellers, and when the temperature reached a prescribed level, oxygen gas with purity of 99% was introduced into the solution. A flow rate of the oxygen gas was set to be 4L/minute. This state was maintained as it is for seven hours, and thereafter the temperature was decreased to 70°C, and precipitates were immediately filtered. The amount of the precipitates was 631.5g in a wet state.

The generated precipitates were subjected to be repulped and washed for one hour by using distillated water, which was then filtered and dried at 60°C for 18 hours, to thereby obtain the scorodite of the present invention. A given quantity of this scorodite was picked to prepare an analysis sample, and grades of arsenic, iron, sulfur, and sodium were analyzed by ICP. The result is described in table 1.

**[Table 1]**

| | As | Fe | S | Na |
|---|---|---|---|---|
| Scorodite sample | (%) | (%) | (%) | (ppm) |
| | 31.85 | 24.45 | 0.34 | 104 |

The scorodite of the present invention was divided into three samples of 120g each, and each of them was set as samples 1 to 3.
First, sample 1 was added to alkaline solution (NaOH solution, concentration 50g/L) 600mL. In the same way, sample 2 was added to alkaline solution (NaOH solution, concentration 100g/L) 600mL, and sample 3 was added to alkaline solution (NaOH solution, concentration 200g/L) 600mL.
Then, these three solutions were stirred at rotation of 500rpm for five minutes by using the paddles. The liquid temperature at this time became 45°C from room temperature. After these stirrings were ended,'these solutions were separated into the precipitates and alkaline solutions.

The generated precipitates were washed with water using 3600g of distilled water, and were dried at 60°C for 18 hours, to thereby obtain porous iron oxide samples 1 to 3 of the present invention. The grades of arsenic, iron, sulfur, and sodium contained in the porous iron oxide samples 1 to 3 were analyzed by ICP(emission spectral analyzing method) in the same way as the aforementioned scorodite sample, and further weight and moisture content contained therein were measured. These analyses results are described in table 2.
Meanwhile, concentrations of arsenic, iron, sulfur, and sodium dissolved in each alkaline solution which is separated from the porous iron oxide samples 1 to 3, pH, and ORP were measured. These analyses results are described in table 2.
Further, a degree of leached amount of each element was calculated, from the result of the grades of arsenic, iron, sulfur, and sodium contained in the porous iron oxide samples 1 to 3, and the analysis result of quantities of arsenic, iron, sulfur, and sodium dissolved in each alkaline solution. The calculation results are described in table 2.

**[Table 2]**

| | | NaOH | As | Fe | S | Na | dry | Moisture |
|---|---|---|---|---|---|---|---|---|
| | | (g/L) | (%) | (%) | (%) | (ppm) | (g) | (g) |
| Porous iron oxide | Sample 1 | 50 | 21.8 | 34.56 | 0.067 | 0.6 | 130.3 | 37.28 |
| | Sample 2 | 100 | 4.62 | 52.45 | 0.049 | 1.98 | 86.92 | 50.66 |
| | Sample 3 | 200 | 1.92 | 53.94 | 0.037 | 3.3 | 88.92 | 42.88 |

| | | NaOH | As | Fe | S | Na | PH | ORP |
|---|---|---|---|---|---|---|---|---|
| | | (g/L) | (g/L) | (mg/L) | (mg/L) | (g/L) | | (mV) |
| Alkaline solution | Sample 1 | 50 | 34.878 | 472 | 715 | 28.75 | 10.95 | -450 |
| | Sample 2 | 100 | 60.744 | 2 | 954 | 57.5 | 12.17 | -108 |
| | Sample 3 | 200 | 50.761 | 10 | 1267 | 115 | 13.67 | -210 |

| | | NaOH | As | Fe | S | Na | | |
|---|---|---|---|---|---|---|---|---|
| | | (g/L) | (%) | (%) | (%) | (%) | | |
| Letching rate (residual pace) | Sample 1 | 50 | 55.42 | 7.93 | 87.09 | 62.42 | | |
| | Sample 2 | 100 | 93.70 | 6.77 | 93.70 | 17.26 | | |
| | Sample 3 | 200 | 97.32 | 1.9189 | 95.149 | -41.07 | | |

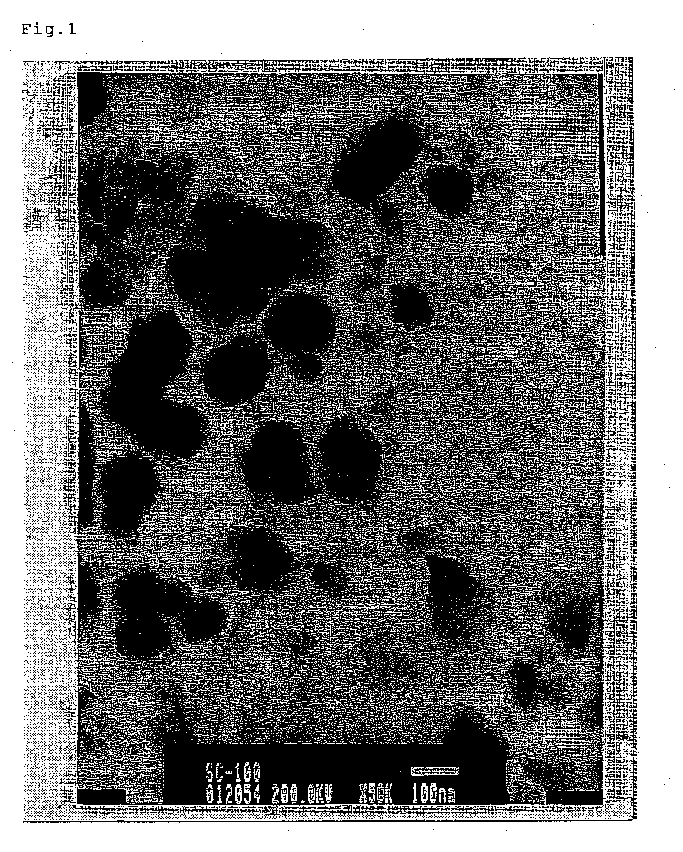

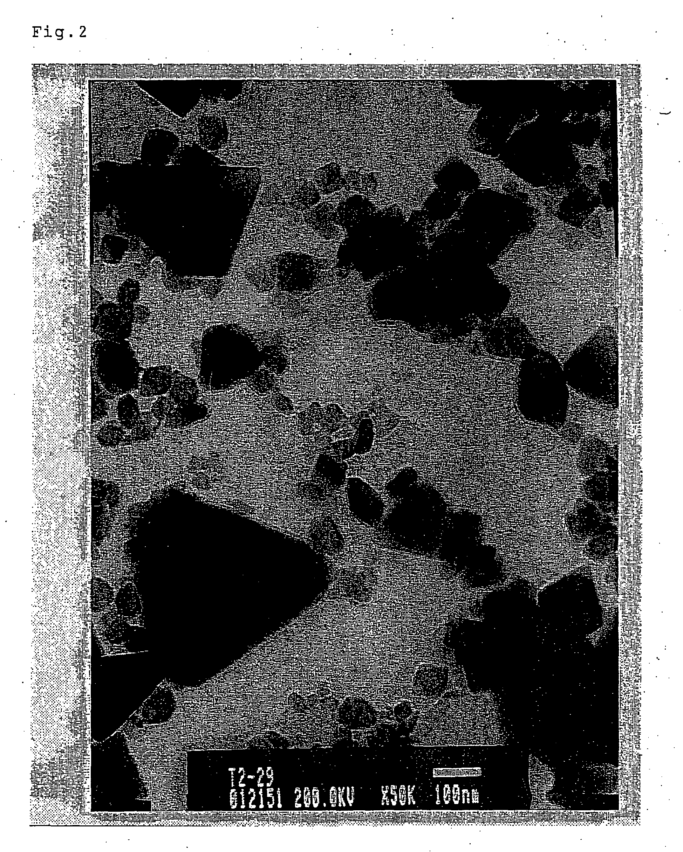

When the results of table 2 were investigated, it was found that the arsenic was dissolved and lost from any one of the porous iron oxide samples 1 to 3. Above all, when 100g/L and 200g/L of NaOH aqueous solution was used as the alkaline solution, it was found that the arsenic was completely dissolved and lost from scorodite samples 2 and 3, to become the porous iron oxide samples 2 and 3. Meanwhile, it was found that in the porous iron oxide samples 2 and 3, iron was not dissolved into the alkaline solution and was remained in these samples 2 and 3. Further, it was also found that sodium contents were less in these porous iron oxide samples 2 and 3. Accordingly, it was found that these samples 2 and 3 were compounds mainly composed of iron and oxygen.
Among these samples, TEM photograph of the porous iron oxide ample 2 is shown in FIG. 1, and the TEM photograph of the scorodite sample is shown in FIG. 2 for comparison.
Shape observation of a crystal particle by TEM was performed by using S-4500 produced by Hitachi, Ltd.

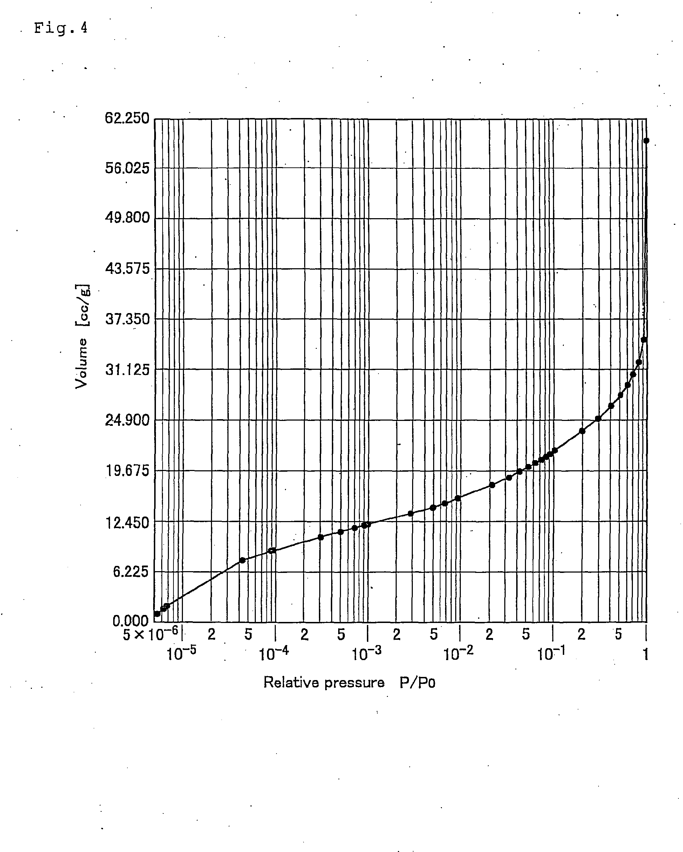

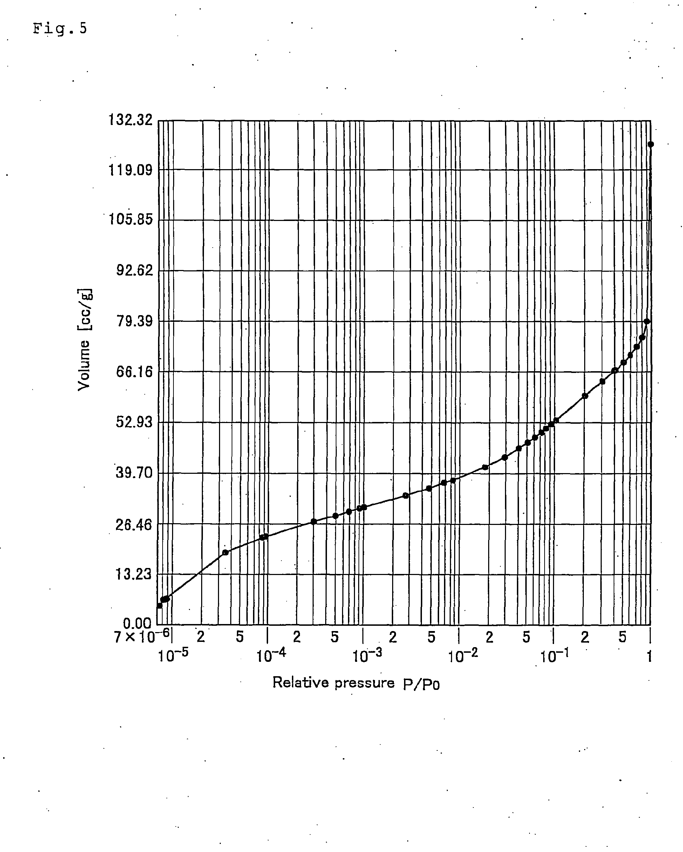

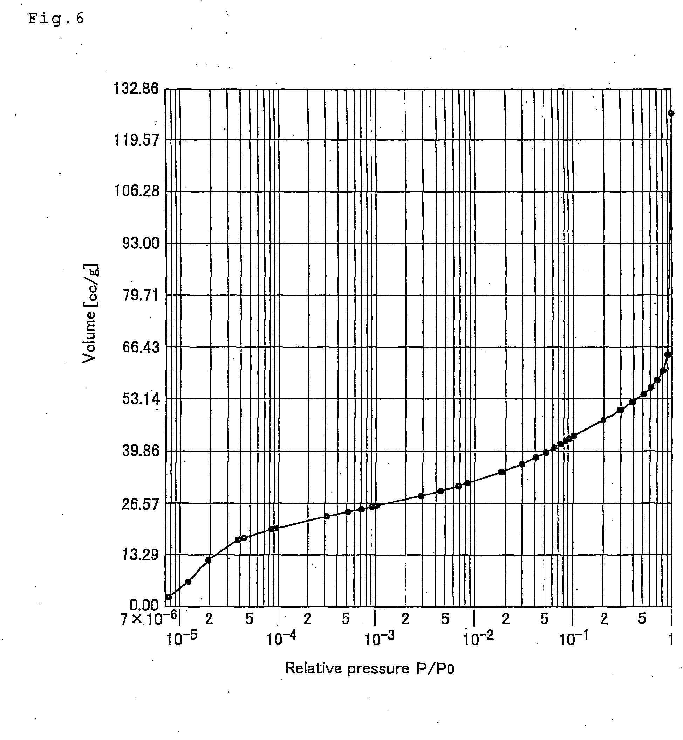

Next, regarding the porous iron oxide samples 1 to 3 of the present invention, and the scorodite sample for comparison, analyses of specific surface areas by a nitrogen gas adsorption method were performed. In the analyses by this gas adsorption method, a BET measurement device (produced by YUASA. IONICS, product name: AUTOSORB) was used.

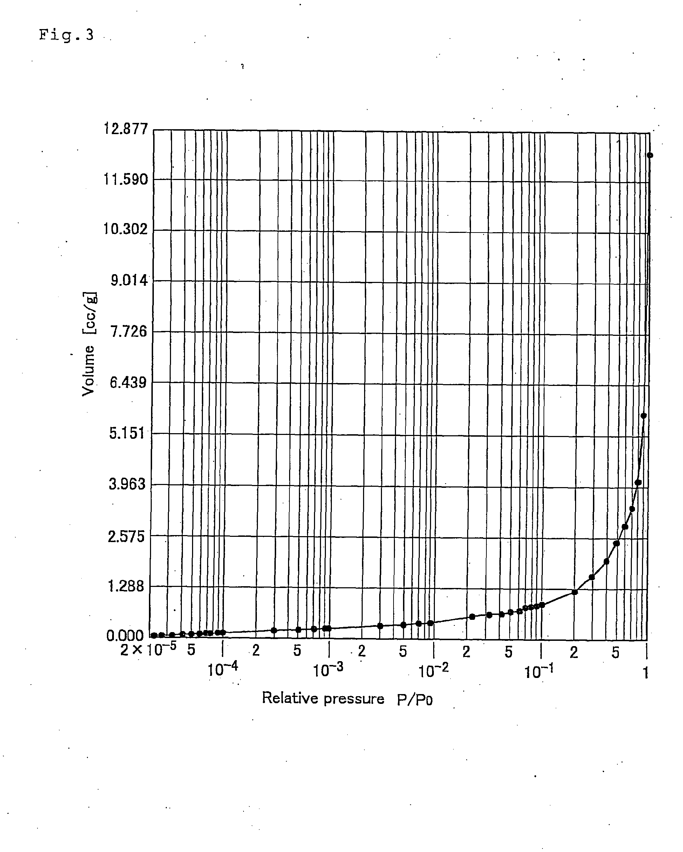

FIGs. 3 to 6 show views of adsorption isotherm measured by this gas adsorption method. Note that FIGs. 3 to 6 are graphs, with an adsorption gas volume (quantity) taken on the vertical axis, and a relative pressure taken on the horizontal axis.
Then, FIG. 3 shows the adsorption isotherm of the scorodite sample, FIG. 4 shows the adsorption isotherm of the porous iron oxide sample 1, FIG. 5 shows the adsorption isotherm of the porous iron oxide sample 2, and FIG. 6 shows the adsorption isotherm of the porous iron oxide sample 3.
Values of a BET specific surface area, a micropore region area, an external surface area, a V-t surface area are obtained, by the estimated values on the adsorption isotherm, by utilizing data analysis methods of BET method (multipoint method), MP method (micro-mesoporous distribution method), and t-plot method (micropore size distribution method) and, by an by an arithmetic operation function of this device. These results are shown in table 3.
Here, the BET multipoint method is a method for calculating a specific surface area by a BET method from' the adsorption gas volume (quantity), at three points of 0.1, 0.2, 0.3 of the relative pressure (P/Po).

Further, the value obtained by separating the specific surface area into an internal area of the pore region and an external surface area of each sample was calculated, and this pore ratio (internal area of the pore region/total surface area) was calculated. Similarly, the value obtained by separating the specific surface area measured by the BET multipoint method (three point method) into V-t surface area and external surface area of each sample was measured, and this pore ratio (V-t surface area/total surface area) was calculated. These values are described in table 3.

**[Table 3]**

| | | t-method | | | MP-method | | | |
|---|---|---|---|---|---|---|---|---|
| | BET multipoint method | Pore region | External surface area | Pore ratio | V-t surface area | External surface area | Pore ratio | BET single point method |
| | (m²/g) | (m²/g) | (m²/g) | - (%) | (m²/g) | (m²/g) | (%) | (m²/g) |
| Sample 1 | 75.26 | 30.47 | 44.79 | 40 | 55.73 | 19.53 | 74 | 6.93 |
| Sample 2 | 192 | 95.31 | 96.69 | 50 | 167.7 | 24.3 | 87 | 14.14 |
| Sample 3 | 149.2 | 60.89 | 88.31 | 41 | 133.2 | 16 | 89 | 15.51 |
| Scorodite | 6.009 | 0 | 6.009 | 0 | 1.79 | 4.219 | 30 | 0.3 |

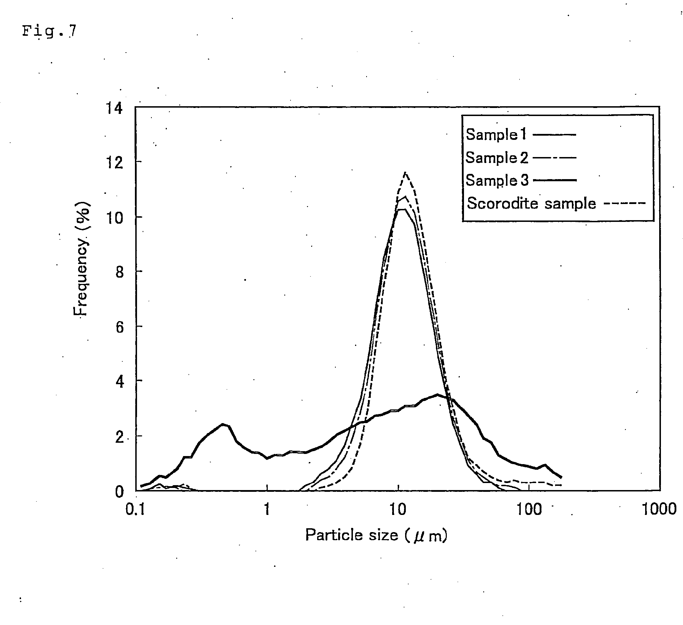

Next, particle size distributions of the porous iron oxide samples 1 to 3 of the present invention and the scorodite sample were measured and the results were shown in FIG. 7.

FIG. 7 shows a graph in which frequency is taken on the vertical axis, and a particle size is taken on the horizontal axis,'the particle size distribution of sample 1 is shown by solid line, the particle size distribution of sample 2 is shown by one dot chain line, the particle size distribution of sample 3 is shown by double line, and the particle size distribution of the scorodite sample is shown by broken line.

From the results of FIGs. 1 and 2 and table 3, it was found that the porous iron oxide of the present invention was an extremely large iron oxide compound, having particle size of 10µm or more and 100µm or less and having a specific surface area of 50m²/g or more. Then, from this particle size and the extremely large specific surface area, it was substantiated from the particle size and an extremely large specific surface area, that the porous iron oxide of the present invention had an extremely porous property, having pores of 10 Å or more and 30 Å or less.

In addition, it is found from the particle size distribution shown in FIG. 7, that the particle size distribution of the porous iron oxide samples 1, 2 of the present invention and the particle size distribution of the scorodite sample before leaching, are overlapped with each other satisfactorily. Meanwhile, the particle size distribution of the porous iron oxide sample 3 of the present invention is different from the particle size distribution of the porous iron oxide samples 1, 2 and the scorodite sample. It appears that this is because the structure of particles is deformed when the arsenic is dissolved in the alkaline solution from the porous iron oxide sample 3. Also, it appears that this result substantiates that the porous iron oxide samples 1, 2 are turned into the porous iron oxide while maintaining the particle structure at the time of scorodite. Namely, it was found that the porous iron oxide of the present invention was not formed by growth of the particles by a synthesis reaction, but was formed while maintaining an original scorodite particle structure.

Next, an arsenic adsorption capability of the porous iron oxide of the present invention was tested, by using the porous iron oxide of the present invention, and an arsenic-containing sample solution containing arsenic (III) ions (arsenic concentration 1100mg/L) and an arsenic-containing sample solution containing arsenic (V) ions (arsenic concentration 1050mg/L).
Note that sample 2 was used as the porous iron oxide of the present invention, and the arsenic-containing sample solution was prepared, with arsenic concentration ((III) or (V)) set to be 1g/L. Reagents produced by Wako Pure Chemical Industries, Ltd. were used for the arsenic solution.

First, the arsenic (III)-containing sample solution was divided into five kinds such as samples (1) to (5), and the arsenic (V)-containing sample solution was divided into six kinds such as samples (6) to (11).

Then, the sample (1) was set as a non-adjusted one not added with reagent, etc, and samples (2) or (3) was added, with sodium hydroxide and each initial pH adjusted to 8 or 5. Sample (4) was added with sulfuric acid, and pH was adjusted to 3. in sample (5), pH of the arsenic-containing solution was not adjusted.

In the arsenic (V) solution, sample (6) was not adjusted, and each initial pH of samples (7) to (10), was adjusted with sulfuric acid, to 6, 4, 3, and 2. Sample (11) was set similarly to the case of the sample (5).

Next, the porous iron oxide sample and each sample of the arsenic-containing sample solution (1) to (4), and (6) to (10) were mixed in a mass ratio of 1:10. Then, each mixture was shaken for one hour by a shaker, which was then subjected to solid/liquid separation, and a composition analysis of a filtrate was performed. The final pH values of these filtrates, and concentrations of arsenic, iron, sulfur, and sodium of the solutions are shown in table 4.

Samples (5) and (11) are cases of using a porous iron oxide sample 2, which is obtained in such a way that after dissolving the scorodite into the alkaline solution, sulfuric acid is added thereto', and pH of the slurry is adjusted to 5.2, and this slurry is filtered. This porous iron oxide sample 2 and an arsenic-containing sample (5) or (11) were mixed in a'mass ratio of 1:10. Then, each mixture was shaken for one hour by the shaker, which was then subjected to solid/liquid separation, and the composition analysis of the filtrate was performed. The final pH values of these filtrates, and the concentrations of arsenic, sulfur, and sodium of the solutions are shown in table 4.

**[Table 4]**

| | | pH | | As | Fe | S | Na |
|---|---|---|---|---|---|---|---|
| | | Initial | Final | (mg/L) | (mg/L) | (mg/L) | (mg/L) |
| Sample (1) | As (III) | Non- adjusted | 4.6 | 4.44 | 0.06 | 1200 | 1632 |
| Sample (2) | As (III) | 8 | 7.4 | 1.68 | tr | 900 | 1496 |
| Sample (3) | As (III) | 5 | 4.9 | 2.45 | 0.14 | 1550 | 2341 |
| Sample (4) | As (III) | 3 | 3.6 | 8.87 | 1.1 | 1640 | 2598 |
| Sample (5) | As (III) | Non- adjusted* | 4.5 | 4.8 | tr | 20 | 35 |
| Sample (6) | As (V) | Non- adjusted | 8.92 | 289 | 8 | 79 | 421 |
| Sample (7) | As (V) | 6 | 7.7 | 27.5 | 1.4 | 600 | 1185 |
| Sample (8) | As (V) | 4 | 5.6 | tr | tr | 1573 | 1832 |
| Sample (9) | As (V) | 3 | 4.1 | 0.7 | 0 | 1836 | 2140 |
| Sample (10) | As (V) | 2 | 3.1 | 2 | 2 | 2170 | 2508 |
| Sample (11) | As (V) | Non- adjusted* | 3.9 | 0.04 | 0.09 | 20 | 34 |

Wherein, "Non-adjusted" shows that although pH of the solution is not adjusted, pH of the porous iron oxide sample is adjusted.

From this result, the following matter can be confirmed.
It is found that the porous iron oxide of the present invention has a remarkable adsorption capability, even when the arsenic contained in the solution to be treated is trivalent or pentavalent. Even in a case that pH of the solution to be treated is 8 to 2, the arsenic adsorption capability of the porous iron oxide of the present invention is greatly exhibited.
In addition, by previously adjusting pH of the porous iron oxide of the present invention to the acidic side, the arsenic adsorption capability of the porous iron oxide of the present invention is greatly exhibited, even in a case that pH of the solution to be treated is not adjusted yet.
Note that tr in the table shows a value of a detection limit or less.

### (Example 2)

In the same way as the example 1, the porous iron oxide sample 2 of the present invention was produced.

Meanwhile, the fluorine solution, with the fluorine concentration set to be 1g/L was prepared from NaF of the reagent, and this fluorine solution was divided into three kinds, such as samples (12) to (14).

Sample (12) was added with sodium hydroxide, and initial pH of the reaction was adjusted to 9. Sample (13) was added with sulfuric acid, and pH was adjusted to 3. In Sample (14), similar treatment as that of the example 1(5) was applied to the porous iron oxide sample, although the fluorine solution was not adjusted.

Next, the porous iron oxide sample 2 and each fluorine solution sample (12) (13) are mixed in a mass ratio of 1:10. Then, after each mixture was shaken for one hour by the shaker, the-mixture was subjected to solid/liquid separation, and the composition analysis of the filtrate was performed. The final pH values of these filtrates and the concentrations of fluorine of the solutions are shown in table 5.
Meanwhile, similarly to the example 1, the porous iron oxide sample 2 was adjusted, with pH of the porous iron oxide sample 2* set to be 5.2.
This porous iron oxide sample 2* and the fluorine solution sample (14) were mixed in the mass ratio of 1:10. Then, after this mixture was shaken for one hour by the shaker, the mixture was subjected to solid/liquid separation, and the composition analysis of the filtrate was performed. The final pH value of this filtrate and the concentration of fluorine of the solution are shown in table 5.
Note that the concentration of fluorine of the solution was measured by the Ion Chromatography (IA-100) produced by TOA DENPA KOGYO KK.

**(Table 5)**

| | | PH | | F |
|---|---|---|---|---|
| | | Initial | Final | (mg/L) |
| Sample (12) | F | 9 | 9.64 | 10.57 |
| Sample (13) | F | 3 | 3.5 | 55 |
| Sample (14) | F | Non-adjusted* | 6.1 | 439 |

Wherein "Non-adjusted" shows that although pH of the solution is not adjusted, pH of the porous iron oxide sample is adjusted.

From this result, the following matter was confirmed. By previously adjusting pH of the solution to be treated to 9 or less, the fluorine adsorption capability of the porous iron oxide of the present invention is greatly exhibited. In addition, by previously adjusting pH of the porous iron oxide of the present invention to the acidic side, the fluorine adsorption capability of the porous iron oxide of the present invention is improved, even in a case that pH of the solution to be treated is not adjusted yet.

The porous iron oxide of the present invention has an unconventionally high adsorption capability toward various environmentally hazardous substances. By using this porous iron oxide, recovery of the environmentally hazardous substances is possible, without selectively using the adsorptive agent, for each environmentally hazardous substance desired to be recovered. As a result, the cost can be reduced, by using the facility, material, and management in common.

The porous iron oxide of the present invention has a large particle size, excellent water permeabilities in the column, and further better water permeabilities than those of iron hydroxide compounds. Therefore, productivity in recovering the environmentally hazardous substances is also substantially improved.

### BRIED DESCRIPTION OF THE DRAWINGS

FIG. 1 is a TEM photograph of a porous iron oxide sample 2 of the present invention.
FIG. 2 is a TEM photograph of a scorodite sample of the present invention.
FIG. 3 shows the adsorption isotherm of a measurement of the scorodite sample of the present invention by a gas adsorption method.
FIG. 4 shows the adsorption isotherm of a BET measurement of a porous iron oxide sample 1 of the present invention, wherein volume means an adsorption gas amount.
FIG. 5 is the adsorption isotherm of the BET measurement of the porous iron oxide sample 2 of the present invention.
FI'G. 6 is the adsorption isotherm of the BET measurement of a porous iron oxide sample 3 of the present invention.
FIG. 7 is a graph showing particle size distributions of porous iron oxide samples 1 to 3 and the scorodite sample, according to the present invention.

## Claims

1. A porous iron oxide, having a particle size of 10µm or more and 100µm or less, with a specific surface area measured by a nitrogen gas adsorption method set to be 50m²/g or more.

2. The porous iron oxide according to claim 1, having pores with a diameter measured by a nitrogen gas adsorption method set to be 10 Å (Angstrom, 10⁻¹⁰m) or more and 30 Å or less.

3. A method for producing a porous iron oxide, comprising the steps of:
adding a divalent iron ion to an arsenic-containing solution, then adding an oxidant, stirring, and heating the solution, with a molar ratio of iron/arsenic (Fe/As) in this solution set to be 1 or more, and thereafter subjecting this solution to solid/liquid separation, to thereby obtain a solid matter;
obtaining a slurry by charging this solid matter into an alkaline solution; and
subjecting this slurry to solid/liquid separation, to thereby obtain a porous iron oxide.

4. A treating method for water to be treated, which is a method for treating water to be treated containing arsenic, wherein the water to be treated is passed through a column filled with the porous iron oxide according to claim 1 or claim 2, and arsenic is adsorbed on the porous iron oxide and removed.

5. A method for treating water to be treated, which is a method for treating water to be treated containing arsenic, wherein the porous iron oxide according to the claim 1 or claim 2 is charged into the water to be treated, and arsenic is adsorbed on the porous iron oxide and removed.

6. A method for treating water to be treated, which is a method for treating water to be treated containing fluorine, wherein the porous iron oxide according to claim 1 or claim 2 is charged into the water to be treated, and fluorine is adsorbed on the porous iron oxide and removed.
